# EUROPÄISCHE PATENTSCHRIFT

(11) **EP 1 950 585 B1**
(45) Veröffentlichungstag und Bekanntmachung des Hinweises auf die Patenterteilung: **30.03.2011**
(21) Anmeldenummer: 07001788.4
(22) Anmeldetag: 26.01.2007
(51) Int. Cl.: G01V 8/20, F16P 3/14

(54) **Verfahren und Vorrichtung zur Sicherheitsüberwachung eines Durchgangs**
Method and device for security monitoring of a passage
Procédé et dispositif destinés à la surveillance de la sécurité d'un passage

(43) Veröffentlichungstag der Anmeldung: 30.07.2008
(73) Patentinhaber: SICK AG, 79183 Waldkirch (DE)
(72) Erfinder: Pirkl, Klaus, 64572 Büttelborn (DE)
(74) Vertreter: Patentanwälte Westphal, Mussgnug & Partner

(56) Entgegenhaltungen:
- EP-A- 1 329 662
- DE-A1-102004 038 906
- US-B2- 6 979 814

## Beschreibung

Die Erfindung betrifft ein Verfahren zur Sicherheitsüberwachung eines Durchgangs sowie eine Vorrichtung zur Durchführung dieses Verfahrens.

Diese bekannten Verfahren und Vorrichtungen dienen zur Absicherung von Durchgängen, durch welche bestimmte Objekte in einen Schutzbereich eintreten oder aus diesem austreten, während ein Eintreten oder Austreten von nicht zugelassenen Objekten, insbesondere von Personen verhindert werden soll. Anwendungen sind z.B. die Zugangssicherung von automatischen Fertigungsanlagen, die Absicherung von Einfahrtsöffnungen zu Fertigungszellen, die Absicherung von Abkantpressen und Palettieranlagen, die Transporttechnik, die Förder- und Lagertechnik, die Verpackungsindustrie, der Maschinenbau und die Automobilindustrie.

Es ist bekannt, solche Durchgänge durch ein Lichtgitter abzusichern, bei welchem übereinander angeordnete Sendeeinheiten Lichtstrahlen aussenden, die von entsprechend angeordneten Empfangseinheiten empfangen werden. Die Unterbrechung der Lichtstrahlen signalisiert den Durchtritt eines Objektes. Falls ein nicht zugelassenen Objekt das Lichtgitter durchtritt, wird eine Sicherheitsfunktion ausgelöst, z.B. ein Alarm ausgelöst, eine gefährdende Produktionsmaschine abgeschaltet oder dergleichen. Damit die zugelassenen Objekte durch den abgesicherten Durchgang hindurchtreten können, wird das sogenannte Muting-Verfahren angewendet, bei welchem ein zugelassenes Objekt erkannt wird und die Sicherheitsfunktion unterdrückt bzw. das Objekt ausgeblendet wird, wenn das Lichtgitter von einem als zugelassen identifizierten Objekt durchtreten wird.

Aus der DE 103 15 667 A1 ist es bekannt, vor dem Lichtgitter weitere Lichtschranken anzubringen, die beim Durchtritt eines Objektes die Muting-Funktion des Lichtgitters bewirken. Bei einem zugelassenen Objekt tritt dieses durch das Lichtgitter durch, solange die vorgeschaltete Lichtschranke durch dieses Objekt unterbrochen ist, so dass das zugelassene Objekt die Lichtschranke passieren kann, ohne die Sicherheitsfunktion auszulösen, wobei eine angepasste Verzögerungszeit eingesetzt werden kann. Passiert z.B. ein Mensch die vorgeschaltete Lichtschranke, so gibt er diese wieder frei, bevor er das Lichtgitter passiert, so dass die Muting-Funktion rechtzeitig beendet ist, bevor der Mensch das Lichtgitter passiert, und die Sicherheitsfunktion wird ausgelöst. Die vor und hinter dem Lichtgitter angeordneten zusätzlichen Lichtschranken vergrö-ßern die Abmessungen der Sicherheitsvorrichtung in Transportrichtung der Objekte. Die Anordnung der vor- und nachgeschalteten Lichtschranken hängt von den Dimensionen der zugelassenen Objekte und der Transportgeschwindigkeit ab, so dass eine Absicherung nur bei Objekten möglich ist, die sich ausreichend von nicht zugelassenen Objekten, insbesondere dem menschlichen Körper unterscheiden.

Aus der DE 103 29 881 A1 ist ein Verfahren und eine Vorrichtung der eingangs genannten Gattung bekannt, bei welchem durch die übereinander angeordneten Lichtstrahlen des Lichtgitters ein durch das Lichtgitter durchtretendes Objekt abgetastet wird. Ein dem Lichtgitter vorgeschalteter Positionssensor zeigt an, dass ein Objekt das Lichtgitter durchtritt. In vorgegebenen Zeitabständen wird das Bitmuster der unterbrochenen und nicht unterbrochenen Lichtstrahlen des Lichtgitters aufgenommen und mit entsprechenden abgespeicherten Bitmustern des zugelassenen Objektes verglichen. Stimmen die Bitmuster überein, wird die Auslösung der Sicherheitsfunktion unterdrückt, ergeben sich Abweichungen von dem gespeicherten Bitmuster, wird die Sicherheitsfunktion ausgelöst. Das zeitlich getaktete Abtasten und Vergleichen mit den gespeicherten Bitmustern setzt voraus, dass das Objekt mit einer vorgegebenen Geschwindigkeit durch das Lichtgitter transportiert wird. Bei einem Lichtgitter mit einer größeren Anzahl von übereinander verlaufenden Lichtstrahlen, z.B. etwa 200 Lichtstrahlen, und einer größeren Durchlaufgeschwindigkeit der Objekte erfordert dieses Verfahren eine große Speicherkapazität für die abgelegten Bitmuster und einen hohen Aufwand für den schnellen Vergleich der aufgenommenen Bitmuster mit den hinterlegten Bitmustern.

Aus der noch nicht veröffentlichten Europäischen Patentanmeldung mit der Anmeldenummer EP 06 013 298 sind eine Methode und eine Vorrichtung bekannt, mittels derer der Aufwand zum Bildvergleich beträchtlich reduziert werden kann. Dabei werden die Signale eines Lichtgitters als lineares Objekt-Bitmuster aufgenommen und mit entsprechenden in einer Auswerteeinheit gespeicherten Referenz-Bitmustern eines zugelassenen Objektes (14) verglichen. Wird das Lichtgitter unterbrochen, so wird eine Sicherheitsfunktion ausgelöst. Die Auslösung dieser Sicherheitsfunktion wird unterdrückt (Muting), wenn die aufgenommenen Objekt-Bitmuster mit den gespeicherten Referenz-Bitmustern übereinstimmen. Zur Objekterkennung werden die Änderungen der jeweils obersten und/oder untersten abgedeckten Lichtstrahlen ausgewertet und auf Übereinstimmung mit den gespeicherten Referenz-Bitmustern verglichen.

Problematisch bei diesem Verfahren ist es, dass zumindest innerhalb gewisser Toleranzgrenzen eine exakte Übereinstimmung der Muster für jedes Exemplar aus einer Klasse von erlaubten Objekten vorliegen muss. Würden z.B. auf Paletten positionierte Kartons erfasst, müsste, wie weiter unten genauer dargelegt ist, nicht nur der Karton genormt sein, sondern auch seine Positionierung auf der Palette hinreichend präzise erfolgen, um eine erfolgreiche Funktionsweise des Systems zu garantieren.

Alle beschriebenen Lösungen haben somit den empfindlichen Nachteil, dass sie extrem wenig Flexibilität gegenüber einer schnellen Variation der Objekte, die den mit dem Lichtgitter gesicherten Durchgang passieren sollen, aufweisen.

Der Erfindung liegt die Aufgabe zugrunde, ein Verfahren und eine Vorrichtung zur Absicherung eines Durchgangs zu schaffen, die eine hohe Zuverlässigkeit mit einem geringen Aufwand gewährleisten und dabei verbesserte Flexibilität hinsichtlich der Verarbeitung von erlaubten Objekten mit voneinander verschiedener Form erlaubt.

Diese Aufgabe wird erfindungsgemäß gelöst durch ein Verfahren mit den Merkmalen des Anspruchs 1 sowie durch eine Vorrichtung mit den Merkmalen des Anspruchs 7.

Vorteilhafte Ausführungen und Weiterbildungen der Erfindung sind in den jeweils rückbezogenen Unteransprüchen angegeben.

Der Erfindung liegt die Erkenntnis zugrunde, dass es möglich ist, durch die Kombination der aus dem Vergleich der Position, d.h. insbesondere der Höhe, aufeinanderfolgender Konturpunkte, die durch den höchsten abgedeckten oder niedrigsten nicht abgedeckten Strahl definiert sind, gewonnenen Informationen mit Informationen aus einem vom Lichtgitter überstrichenen Bereich eine effektive Sicherungsüberwachung eines Durchgangs möglich ist, ohne einen kompletten Konturvergleich oder den Vergleich einer kompletten Linienkontur durchführen zu müssen.

Erfindungsgemäß wird dazu das Lichtgitter zur Auswertung in zwei Teilbereiche zerlegt. In einem ersten, unteren Teilbereich, der unterhalb einer horizontal verlaufenden Beschränkungslinie liegt, werden alle Objekte ausgeblendet ("gemuted"), sie lösen also nie die Sicherheitsfunktion aus.

Diese kann allenfalls ausgelöst werden, wenn eine Unterbrechung des Strahlenganges des zweiten, oberhalb der Beschränkungslinie gelegenen Teils des Lichtgitters durch ein Objekt erfolgt. Die mittels dieses Teils des Lichtgitters ermittelten Informationen hinsichtlich des Durchgangs eines Gegenstandes werden aber zuvor erfindungsgemäß mit dem letzten zuvor gemessenen Wert in Beziehung gesetzt und als ein Kriterium dafür verwendet, zu ermitteln, ob eine Unterbrechung im zweiten, oberen Teilbereich des Lichtgitters, der oberhalb der Beschränkungslinie liegt, erlaubt ist, d.h. nicht zum Auslösen der Sicherheitsfunktion führen soll und daher "gemuted" wird oder nicht.

Als zweites Kriterium für die Entscheidung, ob die Sicherheitsfunktion ausgelöst werden soll oder nicht, wird erfindungsgemäß eine Information aus dem ersten, unteren Teilbereich des Lichtgitters verwendet. Dies kann beispielsweise die Information sein, ob vor dem ersten im zweiten, oberen Teilbereich des Lichtgitters gemessenen Signal eine Trägereinrichtung in das Lichtgitter eingetreten war, was auf eine ordnungsgemäße Zuführung eines Objektes hindeutet und zum "Muten" führen sollte, oder nicht, was bedeutet, dass die Sicherheitsfunktion ausgelöst wird.

Im erfindungsgemäßen System löst sich die Überwachung damit von der Notwendigkeit der expliziten Formerkennung, denn es wird jeweils der aktuelle Punkt der Kontur des Objektes, d.h. der jeweils abgedeckte oberste Lichtstrahl, erfasst und in der Auswerteeinheit mit dem zuvor detektierten Wert verglichen und auf der Basis wählbarer logischer Regeln verarbeitet.

Dieser Vergleich der jeweils aufeinanderfolgenden Änderungen der Konturform macht die Formerkennung von der Durchlaufgeschwindigkeit des abgetasteten Objektes ebenso unabhängig wie von seiner konkreten Form und reduziert die Speicheranforderungen ebenso wie den Aufwand zum "Erlernen" der erlaubten Objekte erheblich. Statt eine Konturlinie jedes individuellen erlaubten Objektes einlernen zu müssen, muss nur noch ein allgemeines Kriterium eingegeben werden, das benachbarte Punkte der Konturlinien einer ganzen Klasse erlaubter Objekte erfüllen.

Damit wird der Aufwand der Speicherung und Auswertung auch bei einem Lichtgitter mit einer großen Anzahl von Lichtstrahlen und somit einer hohen Auflösung konsequent reduziert und eine hohe Durchlaufgeschwindigkeit der zu erfassenden Objekte ermöglicht.

Es sind auch keine zu dem Lichtgitter zusätzlichen Sensoren zur Erfassung und Abtastung der Objekte erforderlich, die den Aufwand und die räumlichen Abmessungen der Sicherheitsüberwachung vergrößern und die Zuverlässigkeit beeinträchtigen könnten. Außerdem ist die Überwachung von der Durchlaufgeschwindigkeit der zu überwachenden Objekte unabhängig, so dass die Überwachung einfacher wird, ohne dass hierdurch die Zuverlässigkeit reduziert wird.

Es hat sich als vorteilhaft erwiesen, die Zahl der in einer Trägereinrichtung vorgesehenen zu detektierenden Trägerfüße bereitzustellen und beim Durchfahren des Objektes durch das Lichtgitter die Sicherheitsfunktion auszulösen, wenn das Objekt endet, ehe die bereitgestellte Zahl von Trägerfüßen der Trägereinrichtung detektiert wurde oder wenn die Zahl der Trägerfüße der Trägereinrichtung die bereitgestellte Zahl überschreitet.

Das Bereitstellen dieser Zahl der Trägerfüße kann vorteilhaft auf eine Reihe unterschiedlicher Weisen geschehen. So ist es möglich, die Zahl bei Systemstart einzulernen, sie kann aber auch durch Parametrierung oder Konfiguration, beispielsweise durch eine PC-Bedienerschnittstelle, erfolgen.

Wenn im Rahmen der Erfindung und ihrer Beschreibung von einer Auswertung des jeweils obersten und/oder untersten durch ein das Lichtgitter passierendes Objekt abgedeckten Lichtstrahles die Rede ist, so kann dies in der Realisierung selbstverständlich auch in der Weise durchgeführt werden, dass der jeweils erste oberhalb und/oder unterhalb des Objektes nicht abgedeckte Lichtstrahl ausgewertet wird. Weiter werden in der Praxis, insbesondere wenn das Lichtgitter eine große Anzahl von Lichtstrahlen mit geringem vertikalem Abstand aufweist, nicht nur ein oberster und/oder unterster abgedeckter Lichtstrahl ausgewertet, sondern einige vertikal aufeinanderfolgenden Lichtstrahlen im Bereich der Konturform, um einen vertikalen Toleranzbereich in der Formerkennung zuzulassen, wodurch eine Störanfälligkeit der Sicherheitsüberwachung verringert wird.

Im Folgenden wird die Erfindung anhand eines konkreten Ausführungsbeispiels und der beigefügten Zeichnungen näher erläutert.

Es zeigen
- Fig. 1: schematisch eine Transporteinrichtung mit einem durch ein Lichtgitter abgesicherten Durchgang,
- Fig. 2: Das allgemeine Auswerteschema, das durch die Auswerteschaltung abgearbeitet wird
- Fig. 3: schematisch die Abtastung des durchtretenden Objektes durch das Lichtgitter.

Das Verfahren und die Vorrichtung zur Sicherheitsüberwachung eines Gefahrenbereichs ist im Ausführungsbeispiel anhand eines Durchgangs erläutert, durch welchen Kartons 14 unterschiedlicher Größe beispielsweise zum Einschweißen in eine Folie transportiert werden, nachdem sie auf Paletten als Trägereinrichtungen 12 positioniert wurden.

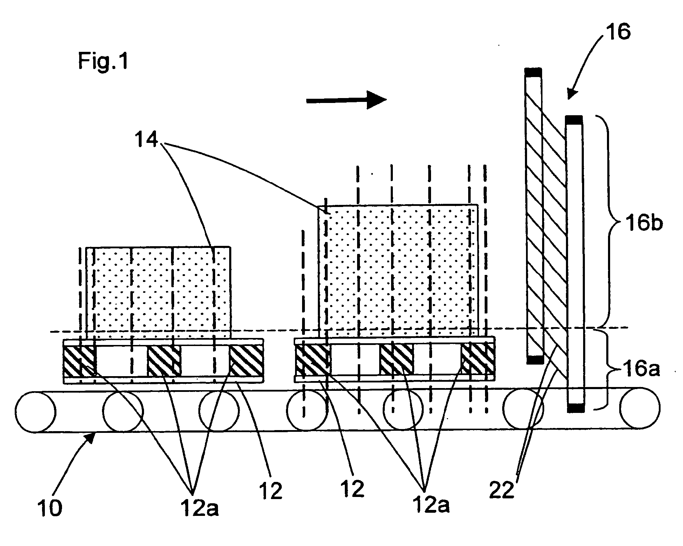

Anhand der Figur 1 verdeutlicht man sich leicht, dass das hier gewählte Beispiel trotz der Einfachheit der auftretenden geometrischen Grundformen eine anspruchsvolle Aufgabe für ein Sicherheitssystem darstellt, an der Systeme gemäß dem Stand der Technik scheitern.

Offensichtlich haben nämlich aufeinander folgende Anordnungen von Karton 14 und Trägereinrichtung 12, d.h. der Palette, weder von der Kontur noch vom Querschnitt her betrachtet ein einheitliches Muster, da die Kartons 14 unterschiedlich groß sind. Selbst wenn genormte Kartons 14 verwendet würden, wäre aufwändig sicherzustellen, dass die Position des Normkartons relativ zur Palette 12 stets exakt gleich ist, da sich andernfalls ebenfalls das Sollprofil verändern würde. Erfindungsgemäß ist hingegen nur eine grobe Positionierung, die einfach zu erreichen ist, notwendig.

Aber auch die vom Material- und Platzaufwand her aufwändigeren Systeme, bei denen die "Muting"-Funktion durch vorgeschaltete Lichtschranken gewährleistet wird, versagen im vorliegenden Fall, denn sie sind in kritischer Weise von der Geometrie der Anordnung und der Transportgeschwindigkeit abhängig. Eine Lichtschranke kann bei dem hier gewählten Beispiel nicht für eine auf eine gegebene Kartonlänge ausgelegte Zeitdauer die "Muting"-Funktion auslösen.

Im einzelnen sind auf einem in Richtung des in Figur 1 eingezeichneten Pfeils laufenden Transportband 10 Trägereinrichtungen 12 angeordnet, die jeweils einen Karton 14 tragen, wobei die Größe der Kartons 14 und ihre Position auf der Trägereinrichtung 12 variiert. Das Transportband 10 läuft durch einen Durchgang, der durch ein Lichtgitter 16 abgesichert ist.

Das Lichtgitter 16 besteht aus einer vertikalen Leiste von übereinander angeordneten Sendeeinheiten und einer gegenüber auf der anderen Seite des Durchgangs angeordneten entsprechenden vertikalen Leiste von übereinander angeordneten Empfangseinheiten. Bei einer Ausführung als Reflexionslichtschranke ist es auch möglich, auf derselben Seite des Durchgangs sowohl Sende- als auch Empfangseinheiten auf derselben und ein reflektierendes Medium auf der anderen Seite anzuordnen.

Die Sendeeinheiten senden parallel übereinander beabstandet horizontal verlaufende Lichtstrahlen 22 aus, die in den jeweils zugeordneten Empfangseinheiten empfangen werden. In der Zeichnung weist das Lichtgitter 16 zur schematischen Erläuterung nur einige wenige Lichtstrahlen 22 auf. In der Praxis werden Lichtgitter 16 verwendet, die eine wesentlich größere Anzahl von Lichtstrahlen 22 mit einem entsprechend geringen vertikalen Abstand aufweisen, um ein Lichtgitter 16 mit hoher Auflösung zu erhalten. In der Praxis werden Lichtgitter 16 verwendet, die je nach Höhe bis zu 240 Lichtstrahlen 22 aufweisen.

Das Lichtgitter 16 sperrt den Durchgang zu dem Gefahrenbereich vollständig ab. Ist die Sicherheitsüberwachung aktiv, so treffen alle von den Sendeeinheiten ausgesandten Lichtstrahlen 22 als freie Lichtstrahlen auf die zugehörigen Empfangseinheiten. Dies wird in einer Auswerteschaltung überwacht. Die sich in dem Gefahrenbereich befindenden Maschinen und Anlagen werden für den Betrieb freigegeben.

Werden einer oder mehrere der Lichtstrahlen abgedeckt, so wird dies in der Auswerteschaltung festgestellt und die Auswerteschaltung löst eine Sicherheitsfunktion aus, die z.B. darin bestehen kann, dass ein Alarmsignal abgegeben wird, das gefährliche Anlagen und Maschinen abgeschaltet werden oder dergleichen.

Damit diese Sicherheitsfunktion nur dann ausgelöst wird, wenn ein unerlaubtes Objekt, insbesondere z.B. ein Mensch den durch das Lichtgitter 16 abgesicherten Durchgang passiert, nicht jedoch, wenn ein zugelassenes Objekt, z.B. der Karton 14 den Durchgang passiert, ist in der Auswerteschaltung eine Muting-Funktion vorgesehen. Diese Muting-Funktion unterdrückt die Auslösung der Sicherheitsfunktion, wenn ein das Lichtgitter 16 passierendes Objekt, z.B. Karton 14, als zugelassenes Objekt erkannt wird.

Erfindungsgemäß ist das Lichtgitter 16 in einen ersten, unteren Teilbereich 16a und einen zweiten, oberen Teilbereich 16b unterteilt, wobei weiterhin erfindungsgemäß jedes Blockieren eines Lichtstrahles aus dem ersten, unteren Teilbereich 16a zwar registriert, aber "gemuted" wird.

Die Sendeeinheiten und die Empfangseinheiten sind in nicht dargestellter und an sich bekannter Weise mit einer Auswerteschaltung verbunden, die das Aussenden und Empfangen der Lichtstrahlen 22 steuert und überwacht und die Lichtsignale der Empfangseinheiten verarbeitet. Insbesondere wird in der Auswerteschaltung erfindungsgemäß eine Information über die Höhe des Objektes aufbereitet und als Signal oder Messwert ausgegeben, die aus der Position des obersten blockierten Strahls des zweiten, oberen Bereichs 16b des Lichtgitters 16 oder des untersten nicht blockierten Strahls desselben, oberhalb dessen alle anderen Lichtstrahlen 22 ebenfalls nicht blockiert sind, gewonnen wird. Wird kein Lichtstrahl 22 des zweiten, oberen Bereichs 16b des Lichtgitters 16 blockiert, wird der Messwert 0 ausgegeben.

Dabei ist erfindungsgemäß vorgesehen, den jeweils zuletzt vor der aktuellen Messung bestimmten Messwert in einem in der Auswerteschaltung vorgesehenen ersten Speicherelement zu speichern. Der aktuell ausgelesene Messwert wird jeweils mit dem in dem ersten Speicherelement gesicherten, direkt davor ausgelesenen Messwert in Beziehung gesetzt, und es wird überprüft, ob das Ergebnis dieser Relation der objektspezifischen Bedingung genügt. Im Fall der Kartons 14 besagt diese Bedingung, dass die Oberfläche im Rahmen der Toleranzen eben ist, also die Messwerte übereinstimmen bzw. die Differenz der Messwerte nahe Null ist.

Darüber hinaus ist die Auswerteschaltung so ausgelegt, dass ein Objekt-Flag in einer dafür vorgesehenen zweiten Speichereinrichtung der Auswerteschaltung gesetzt wird, wenn der zuletzt ermittelte Messwert für die Höhe des Kartons 14 Null ist und der aktuelle Messwert für die Höhe des Kartons 14 von Null verschieden ist. Das Objekt-Flag wird wieder gelöscht, wenn der zuletzt ermittelte Messwert für die Höhe des Kartons 14 von Null verschieden ist und der aktuelle Messwert Null ist.

Weiter liefert die Auswerteschaltung ein Signal, dem zu entnehmen ist, ob der Strahlengang des Lichtes im ersten, unteren Bereich des Lichtgitters 16a unterbrochen wird.

Beim Eintritt eines Kartons 14 auf einer Palette 12 in das Lichtgitter 16 wird zunächst in der erfindungsgemäßen Weise im ersten, unteren Bereich des Lichtgitters 16a der Anfang der Palette erfasst. Die Information, dass eine Palette erfasst wurde, wird in einem erfindungsgemäß vorgesehenen dritten Speicherelement der Auswerteschaltung gespeichert, was fortan als "Setzen des Träger-Flags" bezeichnet wird. Dieses Träger-Flag bleibt gesetzt, bis es zurückgesetzt wird, wobei jede Erfassung eines Teils einer Trägereinrichtung zum erneuten Setzen des Flags führt, auch wenn es bereits gesetzt ist.

Die Bedingung für das Zurücksetzen des Träger-Flags ist, dass bei nicht gesetztem Objekt-Flag auch keine Trägereinrichtung 12 vom ersten, unteren Bereich des Lichtgitters 16a detektiert wird.

Diese Auslegung des Systems erlaubt insbesondere die Verwendung von durchbrochenen Trägereinrichtungen 12 mit einer Anzahl von Trägerfüßen 12a, wie sie beispielsweise bei Paletten, die eine gegebene Anzahl von Trägerfüßen und Lücken zwischen diesen aufweisen, auftreten.

Im zweiten, oberen Bereich 16b des Lichtgitters 16 wird für die Position des aktuellen Punktes der Objektkontur konstant der Wert 0 ausgelesen, solange nur ein unter dem Karton 14 hervorragender Teil der Trägereinrichtung 12 das Lichtgitter 16 passiert, es kommt also auch ohne "Muting" nicht zu einem Auslösen der Sicherheitsfunktion.

Mit dem Eintreten des auf der Palette 12 befindlichen Kartons 14 in das Lichtgitter 16 wird im zweiten, oberen Bereich 16b des Lichtgitters 16 ein von Null verschiedenes Signal erzeugt, das ausgeblendet werden muss, um überhaupt den Durchgang irgendeines Objektes durch das Lichtgitter zu erlauben.

Ein "erlaubter Durchgang" ist im vorliegenden Beispiel dadurch gekennzeichnet, dass das Objekt nicht nach vorne über die Trägereinrichtung hinausragt und das Objekt eine einheitliche Höhe besitzt, es können aber auch andere Bedingungen realisiert werden.

Im Falle der soeben genannten Bedingung wird zunächst geprüft, ob das Träger-Flag gesetzt ist. Ist das der Fall, könnte es sich beim Durchgang des Objekts um einen erlaubten Durchgang handeln, und zwar obwohl die Differenz zwischen dem aktuellen Datenwert, der Höhe der Kante des Objekts, und dem letzten Datenwert, der den Wert 0 hatte, signifikant ist.

Um dies zu berücksichtigen, ist ein zweites Speicherelement vorgesehen, in welchem das "Objekt-Flag" gesetzt werden kann, das angibt, ob ein Objekt detektiert wurde oder nicht. Wird das Objekt-Flag gesetzt, ist dies ein Zeichen dafür, dass ein neues Objekt in das Lichtgitter 16 eintritt. Damit könnte es sich weiterhin um einen erlaubten Durchgang handeln, also wird "gemuted" und die Sicherheitsfunktion nicht ausgeführt.

Während das Objekt das Lichtgitter 16 weiter durchfährt, wird für jeden im zweiten, oberen Bereich 16b des Lichtgitters 16 gemessenen Messwert verglichen, ob die Soll-Beziehung zum vorherigen Messwert erfüllt ist, d.h. im konkreten Beispiel, ob der für die Höhe ermittelte Wert gleich ist. Ist dies der Fall, wird das Signal ausgeblendet ("gemuted") und die Sicherheitsfunktion wird nicht ausgeführt, falls das Träger-Flag gesetzt ist. Andernfalls kommt es zur Ausführung der Sicherheitsfunktion.

In dem Moment, in dem der Karton 14 ganz durch das Lichtgitter 16 hindurchgefahren, ist, wird im zweiten, oberen Bereich 16b des Lichtgitters 16 der Wert Null ausgelesen, während der letzte Messwert von Null signifikant verschieden war. Dementsprechend wird das Objekt-Flag gelöscht. Das Löschen des Objekt-Flags ist ein Zeichen dafür, dass ein Objekt komplett durch das Lichtgitter hindurchgefahren ist, also wird "gemuted" und die Sicherheitsfunktion nicht durchgeführt, falls das Träger-Flag gesetzt ist.

In einer bevorzugten Ausführungsform kann das Löschen des Objekt-Flags in einem dafür bereitgestellten Zähler oder Counter gezählt werden. Insbesondere ist es sinnvoll, diesen Objektzähler auf Null zurückzusetzen, wenn das Träger-Flag gelöscht wird. Bei dieser Konfiguration ist es möglich, die Zahl der Objekte auf einer gegebenen Trägereinrichtung zu bestimmen und mit einem Auslösen der Sicherheitsfunktion zu verbinden, wenn mehr als ein Objekt oder eine vorgegebene Sollanzahl von Objekten auf einem Träger gezählt werden, um beispielsweise zu verhindern, dass jemand hinten auf eine Trägereinrichtung aufspringt und mittels eines waagerecht über dem Kopf gehaltenen Bretts versucht, das Sicherheitssystem zu täuschen.

Im vorstehend detailliert beschriebenen System wird allerdings die Sicherheitsfunktion noch nicht ausgelöst, wenn eine Trägereinrichtung endet, ehe das Objekt zu Ende ist. Falls dieses Verhalten nicht erwünscht ist aber die spezielle Ausgestaltung der Trägereinrichtung 12, insbesondere die Zahl und Anordnung seiner Trägerfüße 12a bekannt ist, wird zweckmäßigerweise die Auswerteschaltung um ein weiteres Flag, das Strukturwechsel-Flag genannt wird, mit zugehörender Speichereinheit und einen weiterer Zähler oder Counter, der hier als Strukturzähler bezeichnet wird, erweitert. Das Strukturwechsel-Flag wird neu gesetzt, wenn es nicht gesetzt war und eine Trägereinrichtung 12 im ersten, unteren Bereich 16a des Lichtgitters 16 detektiert wird. Es wird gelöscht, wenn keine Trägereinrichtung 12 im ersten, unteren Bereich 16a des Lichtgitters 16 detektiert wird. Der Strukturzähler wird jeweils inkrementiert, wenn das Strukturwechsel-Flag neu gesetzt wird, er wird auf Null zurückgesetzt, wenn weder im ersten unteren noch im zweiten oberen Bereich des Lichtgitters 16 ein Gegenstand detektiert wird und der zuvor gelernte Wert Zahl der zu detektierenden Trägerfüße 12a erreicht ist.

Wenn der im Strukturzähler gespeicherte Wert die Zahl der zu detektierenden Trägerfüße 12a erreicht hat, wird das Träger-Flag zurückgesetzt. Da dieses Flag danach neu gesetzt wird, wenn eine Trägereinrichtung 12 im ersten, unteren Bereich des Lichtgitters detektiert wird, wird die Sicherheitsfunktion weiterhin unterdrückt, solange der letzte Fuß einer Trägereinrichtung 12 im Bereich des Lichtgitters ist.

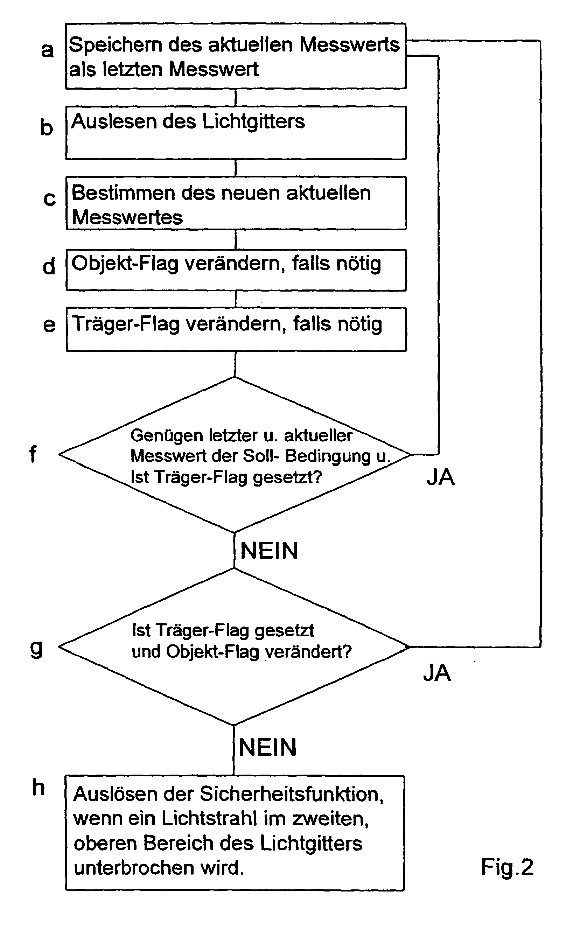

Die Figur 2 zeigt eine Darstellung des in der Steuereinheit der beschriebenen Ausführungsform der Erfindung ablaufenden Verfahrens bzw. Entscheidungsschemas.

In einem nicht dargestellten vorgeschalteten ersten Schritt wird festgestellt, ob bereits ein letzter Messwert vorliegt. Dies kann beispielsweise dadurch erfolgen, dass beim Einschalten der Steuerschaltung ein negativer Messwert in den Speicher für den letzten Messwert eingeschrieben wird. Ein solches Signal kann nie aus dem erfindungsgemäßen Lichtgitter ausgelesen werden und somit als eindeutiger Indikator dafür eingesetzt werden, dass noch kein letzter Messwert vorliegt. In diesem Fall wird ein Messwert ausgelesen.

Im zweiten Schritt a des Verfahrens wird der aktuelle Messwert als neuer letzter Messwert in der dafür vorgesehenen Speichereinheit der Auswerteschaltung gespeichert.

Im dritten Schritt b wird durch eine Messung, d.h. insbesondere durch Auslesen aller Empfangselemente, ein neuer aktueller Messwert bestimmt.

Im vierten Schritt c wird geprüft, ob das Objekt-Flag geändert werden muss. Dazu wird analysiert, ob ein sprunghafter Anstieg von Null oder ein sprunghafter Abfall auf Null zwischen dem letzten Messwert und dem aktuellen Messwert erfolgt ist. Im ersten Fall wird das Objekt-Flag gesetzt, im zweiten Fall wird es gelöscht.

Im fünften Schritt d wird geprüft, ob das Träger-Flag gesetzt ist und die eingelernte Beziehung zwischen dem aktuellen und dem letzten Messwert erfüllt ist. Ist dies der Fall, ist das Objekt erlaubt und es erfolgt ein Rücksprung zum 2. Schritt a.

Andernfalls kommt der sechste Schritt e zur Ausführung. In diesem wird geprüft, ob das Träger-Flag gesetzt und das Objekt-Flag verändert worden ist. Ist dies der Fall, so zeigt die Änderung des Objekt-Flags, dass die Abweichung vom Sollkonturverlauf des Gegenstandes durch den Anfang oder das Ende des Gegenstandes hervorgerufen wird. Ist dies der Fall, ist das Objekt erlaubt und es erfolgt ein Rücksprung zum 2. Schritt a.

Falls nicht zuvor ein Rücksprung erfolgt ist, erfolgt als siebter Schritt f das Auslösen der Sicherheitsfunktion, wenn ein Strahl des zweiten, oberen Bereiches 16b des Lichtgitters 16 unterbrochen ist. Zweckmäßigerweise verbleibt das System in diesem Status, bis die Gefahr oder Störung beseitigt ist und ein System-Reset durchgeführt wurde.

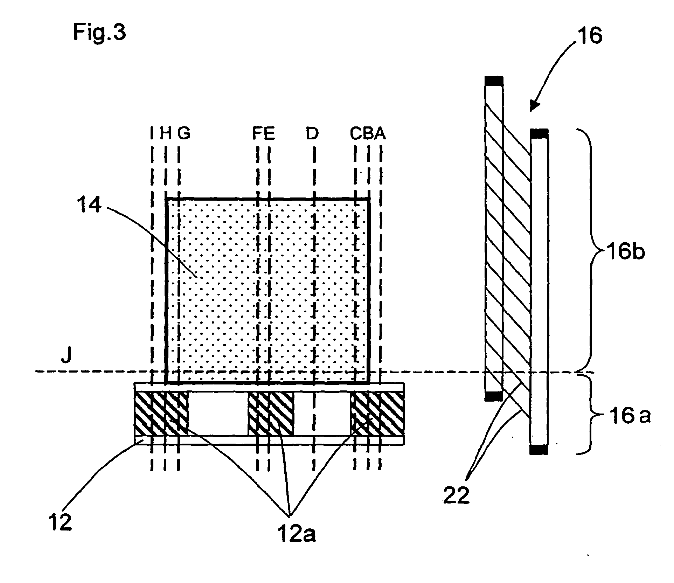

Anhand der Figur 3 ist exemplarisch nachvollziehbar, wie die einzelnen Bedingungen beim Durchlauf eines "erlaubten" Objektes an den durch die Schnittlinien A bis I gekennzeichneten Punkten erfüllt werden.

Dabei wird ein Zustand, in dem die Signalausgabeeinheit des Lichtvorhangs ordnungsgemäßen Betrieb signalisiert, als "grün" und das Signal für einen nicht ordnungsgemäßen Betrieb, bei dem die Sicherheitsfunktion auszulösen wäre, als "rot" bezeichnet.

Zu dem Zeitpunkt, zu dem sich die Schnittlinie A im Lichtgitter 16 befindet, wird der erste Trägerfuß 12a im ersten unteren Bereich 16a des Lichtgitters 16 registriert. Dieses Ereignis wird gespeichert, indem das Träger-Flag gesetzt wird. Es wird aber kein "rotes" Signal ausgegeben, da alle Signale, die unterhalb der Schnittlinie J, die den ersten unteren Bereich 16a von zweiten oberen Bereich 16b des Lichtgitters 16 trennt, erzeugt werden, ausgeblendet werden. In einem System mit Strukturwechsel-Flag und Strukturzähler würde hier weiterhin das Strukturwechsel-Flag gesetzt, weil es nicht gesetzt war und eine Trägereinrichtung 12 detektiert wurde, und der Strukturzähler inkrementiert, weil das Strukturwechsel-Flag neu gesetzt wurde.

Dementsprechend fährt die Trägereinrichtung 12 weiter in den Durchgang ein.

An der Stelle der Schnittlinie B wird weiterhin der erste Trägerfuß 12a detektiert und dementsprechend das Träger-Flag erneut gesetzt. Zusätzlich wird nun der erste Punkt eines Kartons 14 registriert. Da der letzte Messwert den Wert Null hatte, wird das Objekt-Flag gesetzt. Wenn das Träger-Flag gesetzt ist und ein Objekt-Flag verändert wurde, ist die Bewegung erlaubt, also bleibt das Signal grün und der Karton 14 wird weiter eingefahren. Strukturwechsel-Flag und Strukturzähler bleiben unverändert.

An der Schnittlinie C wird immer noch durch den ersten Palettenfuß 12a ein Signal im ersten, unteren Bereich 16a des Lichtgitters 16 erzeugt, so dass das Träger-Flag erneut gesetzt wird. Wenn die Höhe des Objektes, also des Kartons 14, innerhalb der Toleranzgrenzen konstant geblieben ist, bleibt das Signal grün und der Karton wird weiter eingefahren. Strukturwechsel-Flag und Strukturzähler bleiben unverändert.

An der Stelle der Schnittlinie D wird kein Trägerfuß 12a mehr detektiert, also wird das Strukturwechsel-Flag gelöscht. Das Träger-Flag bleibt aber weiter gesetzt, da das Objekt-Flag weiterhin gesetzt ist. Damit kommt es wieder darauf an, ob die Höhe des Objektes innerhalb der Toleranzgrenzen konstant geblieben ist. Ist dies der Fall, bleibt das Signal grün und der Karton 14 wird weiter eingefahren. Der Wert des Strukturzählers bleibt konstant, denn er wird nur erhöht, wenn das Strukturwechsel-Flag neu gesetzt wird.

An der Schnittlinie E wird jetzt durch den zweiten Trägerfuß 12a ein Signal im ersten, unteren Bereich 16a des Lichtgitters 16 erzeugt, so dass das bereits gesetzte Träger-Flag erneut gesetzt wird. Falls dieser Messpunkt der erste ist, an dem der zweite Trägerfuß 12a detektiert wurde, wird auch das Strukturwechsel-Flag neu gesetzt und der Strukturzähler inkrementiert. Wenn die Höhe des Objektes innerhalb der Toleranzgrenzen konstant geblieben ist, bleibt das Signal grün und der Karton 14 wird weiter eingefahren.

An der Schnittlinie F gilt dieselbe Betrachtung wie an Linie D, allerdings ohne Setzen des Strukturwechsel-Flags und ohne Inkrementierung des Strukturzählers.

An der Schnittlinie G gilt dieselbe Betrachtung wie an der Linie E, allerdings wird das Signal im ersten, unteren Bereich 16a des Lichtgitters 16 nun durch den dritten Trägerfuß 12a hervorgerufen. Zwischenzeitlich ist eine Palettenlücke detektiert worden, also ist auch das Strukturwechsel-Flag zwischenzeitlich gelöscht und neu gesetzt worden und der Strukturzähler auf den Wert 3 erhöht worden.

An der Schnittlinie H hat das Objekt soeben das Lichtgitter 16 verlassen, es wird also der erste nicht mehr zum Karton 14 gehörende Punkt registriert. Da der aktuelle Messwert den Wert Null hat und der vorherige von Null signifikant abwich, wird das Objekt-Flag gelöscht. Wenn das Träger-Flag gesetzt ist, was der Fall ist, und ein Objekt-Flag verändert wurde, ist die Bewegung erlaubt; außerdem ist die Zahl der Trägerfüße 12a noch in Übereinstimmung mit dem gelernten Sollwert, der bei den vorliegenden Paletten 3 beträgt, also bleibt das Signal grün und der Karton 14 wird weiter eingefahren. Strukturwechsel-Flag und Strukturzähler bleiben unverändert.

An der Schnittlinie I wird nichts im zweiten, oberen Bereich 16b des Lichtgitters 16 registriert, also bleibt das Signal auf jeden Fall grün und die Trägereinrichtung 12 wird weiter eingefahren.

Mit dem Ende der Palette wird das Strukturwechsel-Flag gelöscht, denn es wird keine Trägereinrichtung 12 mehr detektiert. Der Strukturzähler wird auf Null zurückgesetzt, denn weder im ersten unteren Bereich 16a noch im zweiten oberen Bereich 16b des Lichtgitters 16 wird ein Gegenstand detektiert und der zuvor gelernte Wert Zahl der zu detektierenden Trägerfüße 12a ist erreicht.

### Bezugszeichenliste

- 10: Transportband
- 12: Trägereinrichtung
- 12a: Trägerfuß
- 14: Karton
- 16: Lichtgitter
- 16a: erster, unterer Bereich des Lichtgitters
- 16b: zweiter, obererer Bereich des Lichtgitters
- 22: Lichtstrahlen

## Patentansprüche

1. Verfahren zur Überwachung eines Durchgangs, durch welchen Objekte auf Trägereinrichtungen (12) transportiert werden, wobei der Durchgang durch wenigstens ein Lichtgitter (16) mit mehreren übereinander verlaufenden Lichtstrahlen (22) abgesichert wird, wobei das Lichtgitter (16) in einen ersten, unteren Bereich (16a), den die Trägereinrichtungen (12) durchtreten, und einen zweiten, oberen Bereich (16b), den die Objekte durchtreten, unterteilt ist und über eine Auswerteschaltung verfügt, die ein Signal ausgibt, wenn im ersten, unteren Bereich (16a) ein Lichtstrahl (22) unterbrochen wird, und die eine Information zur Höhe des Objekts ausgibt, umfassend die Schritte:
a. Speichern des aktuellen Wertes für die Höhe als letzten Messwert
b. Auslesen des ersten, unteren Bereichs (16a) des Lichtgitters (16) zur Feststellung, ob eine Trägereinrichtung (12) das Lichtgitter (16) passiert und des zweiten, oberen Bereiches (16b) des Lichtgitters (16)
c. Bestimmung eines neuen aktuellen Messwertes für die Höhe des Objektes aus den aus dem zweiten, oberen Bereich (16b) des Lichtgitters (16) ausgelesenen Daten
d. Setzen eines Objekt-Flags zur Kennzeichnung, dass sich ein Objekt im Lichtgitter (16) befindet, wenn der letzte Messwert innerhalb von Toleranzbereichen den Wert Null hat und der aktuelle Messwert unter Berücksichtigung von Toleranzbereichen von Null verschieden ist, Löschen des Objekt-Flags, wenn der letzte Messwert unter Berücksichtigung des Toleranzbereiches von Null verschieden ist und der aktuelle Messwert innerhalb von Toleranzbereichen den Wert Null hat und Bestimmen, ob eine Änderung des Objekt-Flags durchgeführt wurde
e. Setzen eines Träger-Flags, wenn im ersten, unteren Bereich (16a) des Lichtgitters (16) eine Trägereinrichtung (12) detektiert wird und Löschen des Träger-Flags, wenn im ersten, unteren Bereich (16a) des Lichtgitters (16) keine Trägereinrichtung (12) detektiert wird und kein Objekt-Flag gesetzt ist
f. Überprüfen, ob der aktuelle Messwert und der letzte Messwert einer vorgegebenen Bedingung genügt und Rücksprung zu Schritt a), wenn dies der Fall ist und ein Träger-Flag gesetzt ist.
g. Rücksprung zu Schritt a), falls das Träger-Flag gesetzt ist und das Objekt-Flag verändert wurde
h. Ausführen der Sicherheitsfunktion, wenn ein Lichtstrahl (22) des zweiten, oberen Bereichs (16b) des Lichtgitters (16) unterbrochen ist.

2. Verfahren nach Anspruch 1,
**dadurch gekennzeichnet, dass** die ausgegebene Information zur Höhe des Objektes mit dem am höchsten angeordneten durch das Objekt in seiner aktuellen Position unterbrochenen Lichtstrahl oder dem am niedrigsten liegenden Lichtstrahl, der durch das Objekt in seiner aktuellen Position nicht durchbrochen wird und oberhalb dessen kein weiterer Lichtstrahl mehr durchbrochen wird, korreliert ist.

3. Verfahren nach Anspruch 1 oder 2,
**dadurch gekennzeichnet, dass** die in Schritt f) überprüfte vorgegebene Bedingung darin besteht, dass der aktuelle Messwert innerhalb einer vorgegebenen Fehlertoleranz mit dem letzten Messwert übereinstimmt.

4. Verfahren nach einem der Ansprüche 1 bis 3,
**dadurch gekennzeichnet, dass** am Anfang des ersten Durchlaufs des Verfahrens nach Systemstart die Zahl der Trägerfüße (12a) der Trägereinrichtung (12) gelernt wird.

5. Verfahren nach einem der Ansprüche 1 bis 3,
**dadurch gekennzeichnet, dass** die Zahl der Trägerfüße (12a) der Trägereinrichtung (12) durch Parametrierung oder Konfiguration, insbesondere durch eine PC-Bedienerschnittstelle vorgegeben wird.

6. Verfahren nach Anspruch 4 oder 5,
**dadurch gekennzeichnet, dass** zwischen Schritt (c) und (d) des Verfahrens ein Strukturwechsel-Flag gesetzt wird, wenn es nicht gesetzt war und eine Trägereinrichtung (12) im ersten, unteren Bereich des Lichtgitters (16a) detektiert wird, das Strukturwechsel-Flag gelöscht wird, wenn keine Trägereinrichtung (12) im ersten, unteren Bereich des Lichtgitters (16a) detektiert wird, ein Strukturzähler inkrementiert wird, wenn das Strukturwechsel-Flag neu gesetzt wird, das Träger-Flag zurückgesetzt wird, wenn der im Strukturzähler gespeicherte Wert die gelernte Zahl der zu detektierenden Trägerfüße (12a) der Trägereinrichtung (12) überschreitet, und der Strukturzähler auf Null zurückgesetzt wird, wenn weder im ersten unteren Bereich (16a) noch im zweiten oberen Bereich (16b) des Lichtgitters (16) ein Gegenstand detektiert wird und der zuvor gelernte Wert der Zahl der zu detektierenden Trägerfüße (12a) erreicht ist.

7. Lichtgitter mit Auswerteeinheit, welches zur Durchführung eines Verfahrens gemäß einem der vorstehenden Ansprüche eingerichter ist.

## Claims

1. A method of monitoring a passage through which objects are conveyed on carrier devices (12), wherein the passage is safeguarded by at least one light grid (16) with a plurality of light beams (22) extending one above the other, wherein the light grid (16) is divided into a first, lower region (16a), through which the carrier devices (12) move, and a second, upper region (16b), through which the objects move, and has an evaluation circuit which delivers a signal when a light beam (22) is interrupted in the first, lower region (16a), and which delivers information on the height of the object, comprising the steps:
a. storing the current value of the height as the last measurement value,
b. reading out the first, lower region (16a) of the light grid (16) in order to establish whether a carrier device (12) has passed the light grid (16), and the second, upper region (16b) of the light grid (16),
c. determining a new current measurement value of the height of the object from the data read out from the second, upper region (16b) of the light grid (16),
d. setting an object flag to indicate that an object is present in the light grid (16) if the last measurement value has the value zero within tolerances ranges and the current measurement value is different from zero when taking into consideration tolerances ranges, cancelling the object flag if the last measurement value is different from zero when taking into consideration the tolerances range and the current measurement value has the value zero within tolerances ranges, and determining whether a change of the object flag has been carried out,
e. setting a carrier flag if a carrier device (12) is detected in the first, lower region (16a) of the light grid (16) and cancelling the carrier flag if a carrier device (12) is not detected in the first, lower region (16a) of the light grid (16) and an object flag is not set,
f. checking whether the current measurement value and the last measurement value meet a pre-set condition and returning to step a) if this is the case and a carrier flag is set,
g. returning to step a) if the carrier flag is set and the object flag has been changed, and
h. carrying out the safeguarding function if a light beam (22) of the second, upper region (16b) of the light grid (16) is interrupted.

2. A method according to claim 1, **characterized in that** the information delivered on the height of the object is correlated with the light beam which is situated highest and is interrupted by the object in its current position or with the light beam which is situated lowest and is not interrupted by the object in its current position and above which a further light beam is no longer interrupted.

3. A method according to claim 1 or 2, **characterized in that** the pre-set condition checked in step f) is that the current measurement value should correspond to the last measurement value within a pre-set error tolerance.

4. A method according to any one of claims 1 to 3, **characterized in that** at the beginning of the first run of the method after the start of the system the number of the carrier feet (12a) of the carrier device (12) is learnt.

5. A method according to any one of claims 1 to 3, **characterized in that** the number of the carrier feet (12a) of the carrier device (12) is pre-set by parameterizing or configuration, in particular by a PC user interface.

6. A method according to claim 4 or 5, **characterized in that** a structural change flag is set between steps (c) and (d) of the method if it has not been set and a carrier device (12) is detected in the first, lower region of the light grid (16a), the structural change flag is cancelled if a carrier device (12) is not detected in the first, lower region of the light grid (16a), a structure counter is incremented if the structural change flag is newly set, the carrier flag is set back if the value stored in the structure counter exceeds the learnt number of the carrier feet (12a) of the carrier device (12) to be detected, and the structure counter is set to zero if an object is not detected either in the first, lower region (16a) or in the second, upper region (16b) of the light grid (16) and the previously learnt value of the number of the carrier feet (12a) to be detected is reached.

7. A light grid with an evaluation unit which is set up to perform a method according to any one of the preceding claims.

## Revendications

1. Procédé de surveillance d'un passage à travers lequel des objets sont transportés sur des installations de support (12),
- le passage étant protégé par au moins une barrière lumineuse (16) à plusieurs faisceaux lumineux (22) superposés,
- la barrière lumineuse (16) est subdivisée en une première zone inférieure (16a) traversée par les installations de support (12) et une seconde zone supérieure (16b) traversée par les objets, ainsi qu'un circuit d'exploitation qui émet un signal si dans la première zone inférieure (16a), un faisceau lumineux (22) est coupé et donne une information correspondant à la hauteur de l'objet,
procédé comprenant les étapes suivantes :
a. mise en mémoire de la valeur actuelle de la hauteur comme dernière valeur de mesure,
b. lecture de la première zone inférieure (16a) de la barrière lumineuse (16) pour constater si une installation de support (12) a passé la barrière lumineuse (16) et la seconde zone supérieure (16b) de la barrière lumineuse (16),
c. détermination d'une nouvelle valeur de mesure actuelle pour la hauteur de l'objet à partir des données lues dans la seconde zone supérieure (16b) de la barrière lumineuse (16),
d. mise en place d'un drapeau objet pour indiquer de manière caractéristique qu'un objet se trouve dans la barrière lumineuse (16) si la dernière valeur de mesure a pour valeur zéro dans les plages de tolérance et si la valeur de mesure actuelle ne diffère de zéro qu'en restant en dessous de la prise en compte des plages de tolérance, on efface le drapeau objet si la dernière valeur de mesure en tenant compte de la plage de tolérance est différente de zéro et la valeur de mesure actuelle a une valeur nulle dans la plage de tolérance et on détermine si une modification du drapeau objet a été faite,
e. on place un drapeau de support si dans la première zone inférieure (16a) de la barrière lumineuse (16), on a détecté une installation de support (12) et on efface le drapeau de support si dans la première zone inférieure (16a) de la barrière lumineuse (16), on n'a pas détecté d'installation de support (12) et si aucun drapeau objet n'a été déplacé,
f. on vérifie si la valeur de mesure actuelle et la dernière valeur de mesure répondent à une condition prédéfinie et on revient à l'étape a) si cela est le cas et on fixe un drapeau de support,
g. on revient à l'étape a) si le drapeau de support a été mis et si le drapeau objet a été modifié,
h. on exécute la fonction de sécurité si un faisceau lumineux (22) de la seconde zone supérieure (16b) de la barrière lumineuse (16) a été coupé.

2. Procédé selon la revendication 1,
**caractérisé en ce qu'**
on met en corrélation l'information fournie, relative à la hauteur de l'objet avec le faisceau lumineux le plus haut, coupé par l'objet dans sa position actuelle ou du faisceau lumineux le plus bas qui n'a pas été coupé par l'objet dans sa position actuelle et pas coupure d'autres faisceaux lumineux au-dessus de celui-ci.

3. Procédé selon la revendication 1 ou 2,
**caractérisé en ce que**
la condition prédéfinie, vérifiée dans l'étape f), consiste **en ce que** la valeur de mesure actuelle coïncide avec la dernière valeur de mesure à l'intérieur d'une tolérance d'erreur prédéfinie.

4. Procédé selon l'une des revendications 1 à 3,
**caractérisé en ce qu'**
au début de la première exécution du procédé, après le démarrage du système, on apprend le nombre de pieds de support (12a) de l'installation de support (12).

5. Procédé selon l'une des revendications 1 à 3,
**caractérisé en ce que**
le nombre de pieds de support (12a) de l'installation de support (12) est prédéfini par paramétrage ou configuration, notamment par une interface d'utilisateur PC.

6. Procédé selon la revendication 4 ou 5,
**caractérisé en ce qu'**
entre l'étape c) et l'étape d) du procédé, on place un drapeau de changement de structure s'il n'a pas été mis et on détecte une installation de support (12) dans la première zone inférieure de la barrière lumineuse (16a), on efface le drapeau de changement de structure si aucune installation de support (12) n'a été détectée dans la première zone inférieure de la barrière lumineuse (16a), on incrémente un compteur de structure si le drapeau de changement de structure a été placé de nouveau, on remet à l'état le drapeau de support si la valeur enregistrée dans le compteur de structure dépasse le nombre appris de pieds de support (12a) détectés de l'installation de support (12), et on remet à zéro le compteur de structure si ni dans la première zone inférieure (16a), ni dans la seconde zone supérieure (16b) de la barrière lumineuse (16), on a détecté un objet et si la valeur apprise préalablement atteint le nombre de pieds de support (12a) à détecter.

7. Barrière lumineuse munie d'une unité d'exploitation pour la mise en oeuvre d'un procédé selon l'une des revendications précédente.
